# EUROPÄISCHE PATENTSCHRIFT

(11) **EP 2 291 909 B1**
(45) Veröffentlichungstag und Bekanntmachung des Hinweises auf die Patenterteilung: **27.05.2020**
(21) Anmeldenummer: 09769175.2
(22) Anmeldetag: 18.06.2009
(51) Int. Cl.: H02P 29/02, F04B 49/00

(54) **VERFAHREN ZUR LASTZUSTANDSERKENNUNG EINER PUMPE**
METHOD FOR IDENTIFYING THE LOAD CONDITION OF A PUMP
PROCÉDÉ DE DÉTERMINATION DE L'ÉTAT DE CHARGE D'UNE POMPE

(30) Priorität: 24.06.2008 DE 102008029910
(43) Veröffentlichungstag der Anmeldung: 09.03.2011
(73) Patentinhaber: BSH Hausgeräte GmbH, 81739 München (DE)
(72) Erfinder: ABEL, Falko, 93089 Aufhausen (DE); HOCHHAUSEN, Ralf, 93138 Lappersdorf (DE)
(86) Internationale Anmeldenummer: PCT/EP2009/057592
(87) Internationale Veröffentlichungsnummer: WO 2009/156326

(56) Entgegenhaltungen:
- EP-A- 1 284 415
- CN-A- 1 681 195
- DE-B3-102004 060 206
- JP-A- 2006 006 766
- US-A1- 2004 064 292

## Beschreibung

Die Erfindung betrifft ein Verfahren zur Lastzustandserkennung einer ein Fluid fördernden, von einem Elektromotor angetriebenen Pumpe eines Haushaltsgeräts.

Es ist bekannt, in Geschirrspülern Laugenpumpen mit Spaltpolmotoren oder einsträngige Synchronmotoren einzusetzen. Bei den Elektromotoren dieser Pumpen handelt es sich um einsträngige Motoren, die für einen diskreten Arbeitspunkt ausgelegt sind und direkt an eine elektrische Netzspannung gelegt werden. Prinzipbedingt ist es aufwendig oder schwierig, Informationen über den aktuellen Lastzustand dieser Pumpen zu erhalten.

Die CN 1681195 A und die JP 2006006766 A beschreiben eine Geschirrspülmaschine mit einem Pumpenmotor, eine sensorlose Ansteuerung für den Pumpenmotor, und eine Strom-Detektorschaltung, die drei Strangströme des Pumpenmotors und Last-Variationen detektiert. Solche Last-Variation können z.B. durch einen sinkenden Wasserstand im Geschirrspüler hervorgerufen werden.

Der Erfindung liegt daher die Aufgabe zugrunde, ein Verfahren anzugeben, mit dem der Betriebszustand/Lastzustand einer mit Elektromotor (EC-Motor) angetriebenen Pumpe eines Haushaltsgeräts erkannt werden kann.

Diese Aufgabe wird erfindungsgemäß dadurch gelöst, dass die Pumpe von einem als Synchronmotor ausgebildeten Elektromotor angetrieben wird, wobei aus einer Drehmoment bildenden Stromkomponente mindestens ein Lastzustand der Pumpe ermittelt wird. Demzufolge wird die Pumpe des Haushaltsgeräts erfindungsgemäß mit einem speziellen Elektromotor, nämlich einem dreisträngigen, dreiphasigen und permanenterregten Synchronmotor angetrieben, wobei die Ansteuerung des Pumpenmotors mit Hilfe einer feldorientierten Vektorregelung erfolgt. Dabei wird der Synchronmotor aus einem Umrichter mit einem dreiphasigen, pulsweitenmodulierten Spannungssystem gespeist, welches sich in Frequenz, Phasenlage und Amplitude stellen lässt. Als Modulator wird der Teil der Software bezeichnet, der für die Generierung der Sinusspannungen verantwortlich ist. Ihm folgt der Motortimer als physikalischer Teil des Microcontrollers zur Generierung von PWM-Signalen und anschließend ausgangseitig die Treiberbausteine der B6-Endstufe. Bei der erwähnten Vektorregelung bewegt sich ein Raumzeiger, der mit der Rotorwelle rotiert. Dabei liegt eine Rückkopplung in Form einer Regelschleife und eine aufeinanderfolgende Transformation eines Signals vor. Durch eine d/q-Transformation wird bei der Vektorregelung das Drehmoment des Synchronmotors nur über die q-Komponente des Statorstroms geregelt und die d-Komponente geht im Idealfall gegen Null. Durch eine Strommessung, eine Verwendung eines Motormodells und eine gezielte Ansteuerung des Synchronmotors mit einem dreiphasigen Spannungssystem, das - wie erwähnt - in Frequenz, Phase und Amplitude einstellbar ist, entsteht ein geschlossener Regelkreis. Innerhalb dieses Systems ist die Stromkomponente iq direkt proportional zum Lastzustand der Pumpe. Demzufolge kann aus dem Stromverlauf der Stromkomponente iq auf den Lastfall der von dem Synchronmotor angetriebenen Pumpe geschlossen werden.

Insbesondere wird der Lastzustand aus dem zeitlichen Verlauf der Stromkomponente iq ermittelt.

Nach einer Weiterbildung der Erfindung ist vorgesehen, dass als Lastzustand/als Lastzustände ein Lastfall der Pumpe, ein Leerlauffall der Pumpe, ein blockierter Fluiddurchfluss durch die Pumpe und/oder eine gepumpte Menge des Fluids ermittelt wird/werden. Ist das Haushaltsgerät beispielsweise ein Geschirrspüler, so erfolgt ein Entleeren des Geräts mittels einer so genannten Laugenpumpe. Diese fördert ein Fluid, nämlich Wasser, vollständig aus dem Gerät heraus, läuft dann bei bisherigen Geschirrspülern jedoch noch weiter im Leerlauf und verursacht in diesem Betrieb einen höheren Geräuschpegel sowie weiterhin elektrische Verluste, ohne weiteren Nutzen. Ist bei einer derartigen Pumpe der Ablaufschlauch verstopft, dann läuft die Laugenpumpe zwar mit geringerer Last, bleibt jedoch wirkungslos. Aufgrund der Erfindung werden Leerlauffall und Blockadefall detektiert, sodass die Pumpe rechtzeitig abgeschaltet und im Blockadebetrieb als Fehlerfall abgeschaltet werden kann. Ferner ist es vorteilhaft möglich, die Menge des gepumpten Fluids mit Hilfe der Stromkomponente iq zu bestimmen. Insgesamt liegt demzufolge der Nutzen einer reduzierten Geräuschbildung, einer Energieeinsparung und einer Fehlerfallerkennung vor. Darüber hinaus besteht die Möglichkeit, bestimmte Fluidmengen, insbesondere Wassermengen, gezielt abzupumpen. Grundsätzlich lässt sich sagen, dass die Pumpe zusammen mit ihrem Antrieb erfindungsgemäß als Sensor fungiert, um die erwähnten, unerwünschten oder gewünschten Betriebszustände zu kontrollieren.

Nach einer Weiterbildung der Erfindung ist vorgesehen, dass aus einem aufeinanderfolgenden Stromminimum und Strommaximum des Verlaufs der Stromkomponente iq der Lastfall der Pumpe erkannt wird. Es erfolgt eine Überwachung auf einen derartigen Minimum-Maximum-Verlauf, mit der Folge, dass beim Auftreten dieses Verlaufs der Lastfall der Pumpe sensiert ist.

Erfolgt nach Erkennen des Lastfalls eine Überschreitung eines Vorgabewerts einer negativen Stromänderung der Stromkomponente iq, so wird hieraus auf den Leerlauffall der Pumpe geschlossen. Wird der Leerlauffall erkannt, so kann die Maschinensteuerung des Haushaltsgeräts die Pumpe außer Betrieb nehmen, da davon auszugehen ist, dass das Fluid komplett abgepumpt ist.

Es kann nur die Differenz des Laststromes zum Leerlaufstrom der Stromkomponente iq zur Berechnung des Integrals herangezogen werden. Eine bevorzugte Weiterbildung der Erfindung sieht vor, dass aus dem zeitlichen Integral der Stromkomponente iq die gepumpte Menge des Fluids ermittelt wird. Hierdurch lassen sich gezielt abgepumpte Mengen ermitteln. Erfindungsgemäß lässt sich aus dem zeitlichen Integral der Differenz der im Lastfall vorliegenden Größe der Stromkomponente iq und der im Leerlauffall vorliegenden Größe der Stromkomponente iq die gepumpte Menge des Fluids ermitteln.

Insbesondere ist es vorteilhaft, wenn aus der zeitlichen Messung eines Betriebs der Pumpe und einer Unterschreitung einer minimalen Vorgabegröße der Stromkomponente iq im Lastfall bei nicht erkanntem Leerlauffall auf den blockierten Fluiddurchfluss durch die Pumpe erkannt wird. Bei einem Geschirrspüler oder einer Waschmaschine kann es sich dabei beispielsweise um einen blockierten/verstopften Ablaufschlauch handeln.

Besonders bevorzugt ist es, wenn als Stromkomponente iq eine tiefpassgefilterte Stromkomponente iq verwendet wird, da aufgrund der Tiefpassfilterung besonders sichere Aussagen über den Lastzustand der Pumpe gemacht werden können.

Als Pumpe kommt bevorzugt eine Geschirrspülerpumpe oder Waschmaschinenpumpe zum Einsatz. Die Pumpe kann insbesondere eine Laugenpumpe, bevorzugt eines Geschirrspülers oder einer Waschmaschine, sein. Das Fluid, das von der Pumpe gefördert wird, ist insbesondere ein flüssiges Medium, bevorzugt Wasser oder Lauge. Ferner betrifft die Erfindung eine Vorrichtung zur Lastzustandserkennung einer ein Fluid fördernden, von einem Elektromotor angetriebenen Pumpe eines Haushaltsgeräts, zur Durchführung des vorstehend erwähnten Verfahrens, mit einem die Pumpe antreibenden, elektrischen, dreisträngigen, dreiphasigen, permanenterregten Synchronmotor und einer den Synchronmotor betreibenden, feldorientierten Vektorregelungseinrichtung und einer Detektorschaltung, die aus einer Drehmoment bildenden Stromkomponente iq der Vektorregelung mindestens einen Lastzustand der Pumpe ermittelt.

Ferner betrifft die Erfindung ein Haushaltsgerät, insbesondere eine Geschirrspülmaschine oder eine Waschmaschine, die mit einer Vorrichtung der vorstehenden Art ausgestattet ist.

Die Zeichnungen veranschaulichen die Erfindung anhand eines Ausführungsbeispiels, und zwar zeigt:
- Figur 1: ein Reglerersatzschaltbild einer Vektorregelung für einen dreiphasigen, permanenterregten Synchronmotor einer Pumpe und
- Figur 2: ein Strom-Zeit-Diagramm einer Stromkomponente iq der Vektorregelung.

Die Erfindung geht von einer Pumpe einer Haushaltsmaschine, insbesondere einer Geschirrspülmaschine, aus, die vorzugsweise als Laugenpumpe betrieben wird und dafür zuständig ist, den Geschirrspüler zu entleeren, also ein verwendetes Fluid, insbesondere eine Flüssigkeit, vorzugsweise Wasser, abzupumpen. Diese Pumpe wird von einem elektrischen, dreisträngigen, dreiphasigen, permanenterregten Synchronmotor angetrieben, wobei die drei Stränge des Synchronmotors im vorliegenden Ausführungsbeispiel im Stern verschaltet sind. Dieser Stern bildet einen Knotenpunkt. Da der Summenstrom des Knotenpunkts Null ist, reicht es aus, in zwei der drei Stränge den elektrischen Strom zu messen. Es handelt sich dabei um zwei Strangströme, ia und ib. Mittels der beiden Strangströme ia, ib lässt sich das gesamte dreiphasige System erfassen. Zur Sprachregelung sei noch angemerkt, dass von "Strängen" der Motorwicklung gesprochen wird, wenn es sich um das physikalische Wicklungssystem handelt. Sofern es um die Generierung eines Spannungssystems geht, wird hingegen die Bezeichnung "Phasen" verwendet.

Für die Ansteuerung des Synchronmotors wird eine feldorientierte Vektorregelung verwendet. Hierzu wird das dreiphasige Stromsystem, die Drehzahl n des Synchronmotors und damit der Pumpe und die Lage des Rotors des Synchronmotors, insbesondere der Polradwinkel ϕ, erfasst. Insbesondere ist zur Vereinfachung vorgesehen, dass die Drehzahl n und der Polradwinkel ϕ aus den Strömen über ein Motormodell berechnet. Hierauf wird nachstehend noch näher eingegangen. Demzufolge geht es im Folgenden darum, bei dem beschriebenen System am Eingang eines Regelkreises zwei der drei Strangströme ia, ib zu messen und aus diesen das dreisträngige Stromsystem, die Drehzahl n und den Polradwinkel ϕ mit Hilfe des die Synchronmaschine abbildenden Motormodells zu berechnen.

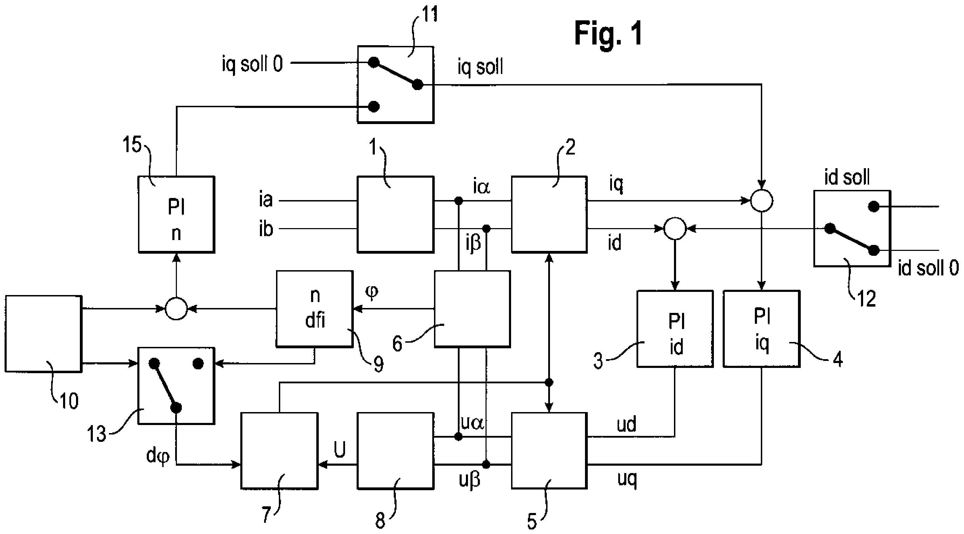

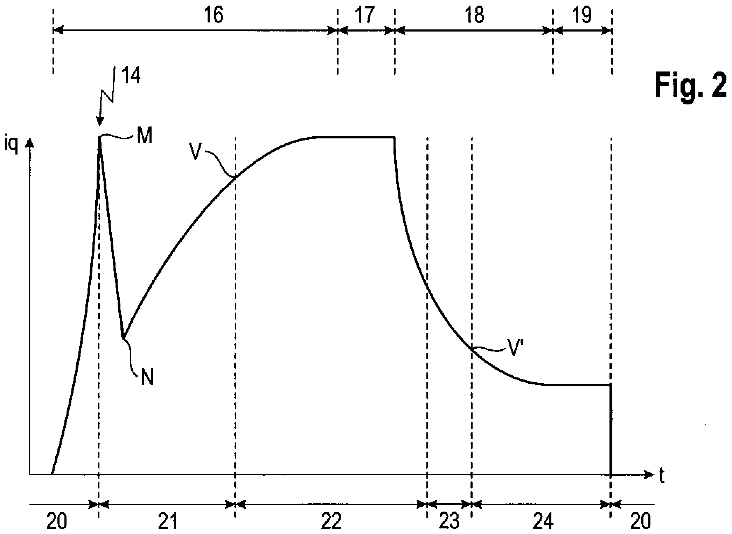

Die Figur 1 verdeutlicht den Regelkreis zur feldorientierten Vektorregelung mit Hilfe eines Reglerersatzschaltbilds. Aus dem dreisträngigen, um 120° versetzte Ströme aufweisenden Stromsystem werden zwei Strangsströme ia, ib gemessen. Mit Hilfe einer mit Bezugszeichen 1 angedeuteten Park-Transformation 1 werden die zwei reellen, um 120° versetzten Strangströme ia, ib in ein komplexes, statororientiertes, orthogonales Koordinatensystem überführt, das heißt, es liegt jetzt ein zweisträngiges 90°-System vor, das die Komponentenströme ia und iß umfasst. Diese beiden Komponentenströme ia und iß werden mit Hilfe einer mit 2 bezeichneten Clark-Transformation über den Rotorwinkel ϕ ins Rotorkoordinatensystem gedreht. Hieraus resultieren die gedrehten Stromkomponenten id und iq, wobei id dem Magnetisierungsstrom und iq dem Drehmoment bildenden Strom des Synchronmotors entsprechen. Diese Stromkomponenten id und iq werden in nachgeschalteten PI-Reglerstufen 3 und 4 auf unterschiedliche Sollwerte id soll und iq soll geregelt. Anschließend erfolgt eine inverse Transformation, die mit dem Bezugszeichen 5 gekennzeichnet ist und die neben den Komponentenspannungen ua und uß für ein Motormodell 6 auch Amplituden für einen Modulator 7 liefern. Bei dem Modulator 7 handelt es sich um ein Element, das in der Lage ist, ein dreiphasiges, pulsweitenmoduliertes Spannungssystem zu erzeugen, welches in Frequenz, Phasenlage und Amplitude einstellbar ist. Für die Bereitstellung der Amplituden der Komponentenspannungen ua und uß ist eingangsseitig des Modulators 7 ein Absolutwertbildner 8 vorgesehen. Der bereits erwähnte Rotorwinkel ϕ (Polradwinkel) wird nicht direkt an der Synchronmaschine gemessen, sondern mit Hilfe des Motormodells 6 aus den Komponentenströmen ia und iß und den Komponentenspannungen ua und uß berechnet. Das Motormodell 6 bildet den Synchronmotor nach. Aus der zeitlichen Differenzierung des Rotorwinkels wird die Drehzahl n berechnet. Dies ist mit dem Bezugszeichen 9 angedeutet. Aus der Drehzahl n wird unter Kenntnis von diskreten Modulationsschrittzeiten ein aktueller Winkelschritt für den Modulator 7 berechnet. Da im Anlaufzeitpunkt des Synchronmotors keinerlei Strom- und Drehzahlinformationen zur Verfügung stehen, wird der Synchronmotor gesteuert angefahren. Hierzu ist ein mit 10 bezeichnetes Rampenmodell vorgesehen, dass nach Vorgabe einer Anfangsrampensteilheit eine aktuelle Zieldrehzahl und einen aktuellen Winkelschritt generiert. Die Sollwerte für die beiden Stromkomponenten id und iq werden fest vorgegeben. Die Figur 1 enthält drei Schalter 11, 12 und 13, die dort jeweils eine Stellung einnehmen, wie sie für den Anlauf des Synchronmotors erforderlich ist. Ist der Synchronmotor angelaufen, so werden sie umgeschaltet. Beim Anlauf durchläuft der Modulator 7 eine Sinustabelle zur Generierung eines Ausgangsspannungsmusters mit dem Winkelinkrement der Rampe des Rampenmodells 10 und der Amplitude aus den Stromreglerkreisen der Anlaufsollwerte. Wird eine festgelegte Drehzahl n erreicht, bei welcher die Strangströme ia, ib sicher gemessen und das Motormodell 6 sicher berechnet werden können, so wird vom gesteuerten in den geregelten Betrieb umgeschaltet, das heißt, die Schalter 11 bis 13 werden umgelegt und es ergibt sich ein Synchronisationspunkt 14 (Figur 2). Ein Drehzahlregler 15, der als PI-Regler ausgebildet ist, berechnet nun nach Vorgabe einer vorliegenden Drehzahlabweichung einen Sollwert iq soll für die Drehmoment bildende Stromkomponente iq. Die magnetisierende Stromkomponente id wird auf Null geregelt.

Im Hinblick auf die Messung der Strangströme ia und iß ist anzumerken, dass diese mit Hilfe von zwei Shuntwiderständen in den Fußpunkten der Halbbrücken der Phasen U und V des Synchronmotors gemessen werden. Beim Modulator 7 ist insbesondere eine B6 Brückenschaltung vorgesehen. Der Spannungsabfall über den erwähnten Shuntwiderständen ist direkt proportional zu den Strömen in den jeweiligen Motorwicklungen U und V. Die Spannungsabfälle an den beiden Shuntwiderständen werden mit Hilfe von zwei schnellen Verstärkerschaltungen an einen Spannungsmessbereich eines Mikrocontrollers von 0 V bis 5 V angepasst. Die Verstärkerschaltungen sind identisch aufgebaut und so dimensioniert, dass eine Strommessung im Raster einer Pulsweitenmodulation ohne Verzerrung möglich ist. Da in den beiden Fußpunkten positive und negative Ströme gleicher Amplitude gemessen werden müssen, besitzen die Verstärkerschaltungen jeweils eine Offsetspannung, welche sich in der Mitte des möglichen Aussteuerbereichs befindet. Die jeweilige Offsetspannung wird bei Motorstillstand ständig gemessen und auf Plausibilität überprüft. Um den Einfluss von Störungen zu minimieren, werden die Offsetspannungen durch SW-Tiefpässe gefiltert. Im Falle einer unplausiblen Offsetspannung nimmt eine Umrichtersoftware einen Fehlerzustand ein, in dem eine Ansteuerung der Pumpe nicht möglich ist.

Eine Abtastung der Strangströme ia und ib erfolgt interruptgesteuert und wird mit Pulsweitenmodulationsfrequenz eines Pulsweitenmodulators des Umrichters durchgeführt. Der Abtastzeitpunkt liegt in der Mitte der Ansteuerung von drei Lowside-Leistungshalbleitern des Umrichters. Zu diesem Zeitpunkt werden die drei Motorwicklungen des Synchronmotors über die Leistungshalbleiter kurzgeschlossen und es kann ein Freilaufstrom der Motorwicklungen gemessen werden. Da die Triggerung der Abtastung genau in der Mitte der Impulse liegt, wird der Einfluss von Störungen aufgrund von Pulsweitenmodulations-Schaltflanken minimiert. Während eines Pulsweitenmodulations-Zyklusses wird immer nur ein Strom abgetastet. Die beiden Ströme werden zeitversetzt um die Pulsweitenmodulations-Zykluszeit vor der Berechnung des Motormodells gemessen. Hierbei wird vorausgesetzt, dass der Strom in den Phasen des Synchronmotors während einer Pulsweitenmodulations-Zykluszeit konstant ist. Die Pulsweitenmodulations-Frequenz wird so gewählt, dass diese Bedingung erfüllt ist. Die Erfassung der Ströme erfolgt mit einer Analog-Digital-Wandler-Auflösung von 10 Bit. Mit dieser Auflösung wird der Spitze zu Spitze-Wert der Phasenströme abgebildet.

Eine Modulation von Ausgangsspannungen des Umrichters ist nach einem Lookuptable (LUT)-Verfahren implementiert. Der aktuelle Winkel der Ausgangsspannung wird in einem Phasenakkumulator (16 Bit) gespeichert und zyklisch alle 600 µs durch einen Regelalgorithmus korrigiert. Zwischen den Korrekturen wird ein Modulationswinkel mit einer konstanten Winkelgeschwindigkeit weitergefahren. Die LUT besitzt eine Auflösung von 16 Bit und ist mit 256 Stützstellen in einem Flash eines Controllers hinterlegt. Ein Update der Pulsweitenmodulations-Werte erfolgt bei jedem zweiten Pulsweitenmodulations-Zyklus. Die Ausgabespannungen werden mit Hilfe einer Zwischenkreisspannung des Umrichters bei jeder Modulationswertberechnung korrigiert. Damit kann ein Einfluss eines Spannungs-Ripples im Zwischenkreis des Umrichters weitgehend kompensiert werden.

Aufgrund des erfindungsgemäßen Regelungskonzepts, nämlich der feldorientierten Vektorregelung, steht die Drehmoment bildende Stromkomponente iq sowie die magnetisierende Stromkomponente id direkt während der Laufzeit zur Verfügung. Der Lastzustand des Modulators 7 (Umrichters) wird somit direkt durch die Stromkomponente iq abgebildet. Die Stromkomponente iq wird einer Tiefpass-Filterung (SW) unterzogen und anschließend erfindungsgemäß als Maß des Belastungszustandes der Pumpe, also zur Lastzustandserkennung von dieser herangezogen.

Die Figur 2 zeigt einen charakteristischen Verlauf der Stromkomponente iq in Bezug auf einen Abpumpvorgang von Lauge/Wasser eines Haushaltsgeräts, insbesondere einer Geschirrspülmaschine.

In Figur 2 ist die Stromkomponente iq in Abhängigkeit von der Zeit t für den Abpumpvorgang der erfindungsgemäß betriebenen Pumpe dargestellt. Es sind verschiedene Zeiträume gekennzeichnet. Hierbei handelt es sich um eine Startzeit 16 der Pumpe, eine sich daran anschließende Zeit 17 mit vollem Volumenstrom, ein daran anschließender Zeitraum 18 mit abfallendem Volumenstrom. Diesem folgt ein Zeitraum 19 ohne Volumenstrom. Im Bereich 20 ist die Pumpe hinsichtlich einer Fluidförderung nicht aktiv. Der Bereich 21 kennzeichnet eine Lasterkennung, der Bereich 22 einen Lastbetrieb, der Bereich 23 ein Entlastungsbetrieb und der Bereich 24 ein Leerlaufbetrieb.

Die nachstehenden Erläuterungen werden bei jedem Neustart der Pumpe, insbesondere Laugenpumpe, automatisch abgearbeitet, indem eine Leerlauferkennung und eine Mengenerkennung neu durchgeführt werden. Hierbei orientiert sich das erfindungsgemäße Verfahren an dem Stromverlauf der Stromkomponente iq gemäß Figur 2. Während des gesteuerten Anlaufs im Bereich 20 (links in der Figur 2) erreicht die Stromkomponente iq ein Maximum M. Nach dem gesteuerten Anlauf erfolgt zum mit einem Blitz in der Figur 2 gekennzeichneten Synchronisationszeitpunkt 14 der Start einer Lasterkennung und einer Leerlauferkennung der Pumpe. Im Anschluss an das Strommaximum M fällt die Stromkomponente iq auf ein Stromminimum N ab, das detektiert wird und ausgehend davon ergibt sich eine positive Stromänderung definierter Höhe, also ein positives diq. Überschreitet dieses einen Vorgabewert V, so liegt der Lastfall vor, das heißt, die Anordnung befindet sich im Zustand der Lasterkennung. Nunmehr erfolgt eine Mengenbestimmung, nämlich die Bestimmung der Menge des von der Pumpe gepumpten Fluids. Hierzu wird das Integral der Differenz (iqLast - iqLeer) gebildet, das proportional zur abgepumpten Fluidmenge ist. Der Leerlaufstrom ist aufgrund eines vorherigen Abpumpvorgangs bekannt. Erreicht das Integral einen Vorgabemengenwert, der für den jeweiligen Abpumpvorgang vorgegeben werden kann, so wird Abpumpen auf Menge bestätigt, das heißt, die vorgegebene Wassermenge ist abgepumpt worden. Gleichzeitig wird das Strommaximum im Lastbetrieb bestimmt und laufend aktualisiert. Eine Abweichung gegenüber diesem Strommaximum, also ein negatives diq, wird zur Leerlauferkennung herangezogen, die nunmehr folgt. Beim Unterschreiten eines Vorgabewertes V' beginnt die Pumpe leer zu laufen und es wird ein Nachlaufzeittimer gestartet (Sicherheitszeit für Leerlaufen), nach dessen Ablauf die Leerlauferkennung gesetzt wird. Anschließend kann noch eine Kalibrierungsmessung durchgeführt werden. Hierzu wird ein weiterer Timer gestartet, um den eingeschwungenen Leerlauf der Pumpe abzuwarten und nach dessen Ablauf wird der Leerlaufstrom gemessen. Dieser wird gespeichert und dient für folgende Abpumpvorgänge als Leerlaufstrombasis.

Um den Fall eines blockierten Fluiddurchflusses durch die Pumpe erkennen zu können, wird davon ausgegangen, dass das Abpumpen der maximalen Fluidmenge aus dem Haushaltsgerät selbst im schlechtesten Fall eine gewisse Vorgabezeit nicht überschreitet. Dieser schlechteste Fall ist durch die Höhe des Ablaufschlauches, den maximalen zulässigen Querschnitt des verschmutzen, teilsweise verstopften oder leicht abgeklemmten Ablaufschlauches sowie die Konsistenz des abzupumpenden Fluids, zum Beispiel Schmutzwasser, definiert. Die Stromkomponente iq ist bei niedrigem Durchfluss durch die Pumpe gering gegenüber der Größe der Stromkomponente iq im Normalbetrieb. Ist die Stromkomponente iq nach Ablauf einer maximalen Vorgabezeit unterhalb eines definierten minimalen Laststromes und wurde nicht der Leerlauffall erkannt, so wird auf einen blockierten Ablaufschlauch oder dergleichen geschlossen. Diese maximale Vorgabezeit wird durch Starten eines Timers am Synchronisationspunkt 14 ausgelöst. Wenn nach Ablauf der Vorgabezeit des Timers kein Leerlauf erkannt wurde und die sensierte Stromkomponente iq einen definierten Vorgabewert unterschreitet, dann wird auf einen blockierten Ablaufschlauch beziehungsweise einen blockierten Fluiddurchfluss erkannt. Eine vorherige Erkennung eines Lastzustandes ist nicht nötig, das heißt, die Erkennung wird unabhängig von der Lasterkennung durchgeführt.

## Patentansprüche

1. Verfahren zur Lastzustandserkennung einer ein Fluid fördernden, von einem Elektromotor angetriebenen Pumpe eines Haushaltsgeräts, wobei die Pumpe von einem dreisträngigen, dreiphasigen, im Stern verschalteten, permanenterregten und als Synchronmotor ausgebildeten Elektromotor unter Verwendung einer Vektorregelung angetrieben wird, wobei aus einer Drehmoment bildenden Stromkomponente iq der Vektorregelung mittels einer Detektorschaltung mindestens ein Lastzustand der Pumpe ermittelt wird, **dadurch gekennzeichnet, dass** nur in zwei der drei Stränge der Strom ia bzw. ib gemessen wird, wobei als Lastzustand / als Lastzustände ein Lastfall der Pumpe, ein Leerlauffall der Pumpe, ein blockierter Fluiddurchfluss durch die Pumpe und/oder eine gepumpte Menge des Fluids ermittelt wird/werden und wobei aus dem zeitlichen Integral der Differenz der im Lastfall vorliegenden Größe der Stromkomponente iq und der im Leerlauffall vorliegenden Größe der Stromkomponente iq die gepumpte Menge des Fluids ermittelt wird.

2. Verfahren nach Anspruch 1, **dadurch gekennzeichnet, dass** aus dem Verlauf der Stromkomponente iq der Lastzustand ermittelt wird.

3. Verfahren nach einem der vorhergehenden Ansprüche, **dadurch gekennzeichnet, dass** aus einem aufeinanderfolgenden Stromminimum und Strommaximum des Verlaufs der Stromkompente iq der Lastfall der Pumpe erkannt wird.

4. Verfahren nach einem der vorhergehenden Ansprüche, **dadurch gekennzeichnet, dass** aus einer nach dem Lastfall erfolgenden Überschreitung eines Vorgabewertes V' einer negativen Stromänderung der Stromkomponente iq der Leerlauffall der Pumpe erkannt wird.

5. Verfahren nach einem der vorhergehenden Ansprüche, **dadurch gekennzeichnet, dass** aus dem zeitlichen Integral der Stromkomponente iq die gepumpte Menge des Fluids ermittelt wird.

6. Verfahren nach einem der vorhergehenden Ansprüche, **dadurch gekennzeichnet, dass** aus der zeitlichen Messung eines Betriebs der Pumpe und einer Unterschreitung einer minimalen Vorgabegröße der Stromkomponente iq im Lastfall bei nicht erkanntem Leerlauffall der blockierte Fluiddurchfluss durch die Pumpe erkannt wird.

7. Verfahren nach einem der vorhergehenden Ansprüche, **dadurch gekennzeichnet, dass** als Stromkomponente iq eine tiefpassgefilterte Stromkomponente iq verwendet wird.

8. Verfahren nach einem der vorhergehenden Ansprüche, **dadurch gekennzeichnet, dass** als Pumpe eine Geschirrspülerpumpe oder Waschmaschinenpumpe verwendet wird.

9. Verfahren nach einem der vorhergehenden Ansprüche, **dadurch gekennzeichnet, dass** als Pumpe eine Laugenpumpe, insbesondere eines Geschirrspülers oder einer Waschmaschine, verwendet wird.

10. Verfahren nach einem der vorhergehenden Ansprüche, **dadurch gekennzeichnet, dass** als Fluid ein flüssiges Medium, insbesondere Wasser oder Lauge, gepumpt wird.

11. Vorrichtung zur Lastzustandserkennung einer ein Fluid fördernden, von einem Elektromotor angetriebenen Pumpe eines Haushaltsgeräts, zur Durchführung des Verfahrens nach einem oder mehreren der vorhergehenden Ansprüche.

12. Haushaltsgerät, insbesondere Geschirrspülmaschine oder Waschmaschine, mit einer Vorrichtung nach Anspruch 11.

## Claims

1. Method for identifying the load condition of a fluid-delivering, electric motor driven pump of a household appliance, wherein the pump is driven by a three-line, three-phase, star-connected permanently excited electric motor embodied as a synchronous motor using a vector control, wherein at least one load condition of the pump is determined from a current component iq of the vector control forming a torque by means of a detector circuit, **characterised in that** the current ia or ib is only measured in two of the three lines, wherein a load case of the pump, an idling case of the pump, a blocked fluid flow through the pump and/or a pumped quantity of fluid is/are determined as the load condition/load conditions and wherein the pumped quantity of fluid is determined from the temporal integral of the difference of the variable of the current component iq present in the load case and the variable of the current component iq present in the idling case.

2. Method according to claim 1, **characterised in that** the load condition is determined from the curve of the current component iq.

3. Method according to one of the preceding claims, **characterised in that** the load case of the pump is identified from a consecutive minimum current intensity and maximum current intensity of the path of the current component iq.

4. Method according to one of the preceding claims, **characterised in that** the idling case of the pump is identified from a setpoint value V' of a negative change in current of the current component iq occurring after the load case.

5. Method according to one of the preceding claims, **characterised in that** the pumped quantity of fluid is determined from the temporal integral of the current component iq.

6. Method according to one of the preceding claims, **characterised in that** the blocked flow of fluid through the pump is identified from the temporal measurement of an operation of the pump and a failure to reach a minimal setpoint value of the current component iq in the load case, in the event of an unidentified idling case.

7. Method according to one of the preceding claims, **characterised in that** a lowpass-filtered current component iq is used as a current component iq.

8. Method according to one of the preceding claims, **characterised in that** a dishwasher pump or a washing machine pump is used as a pump.

9. Method according to one of the preceding claims, **characterised in that** a drain pump, in particular a dishwasher or a washing machine, is used as a pump.

10. Method according to one of the preceding claims, **characterised in that** a liquid medium, in particular water or lye, is pumped as a fluid.

11. Device for identifying the load condition of a fluid-delivering electric motor driven pump of a household appliance, for implementing the method according to one or more of the preceding claims.

12. Household appliance, in particular dishwasher or washing machine, having a device according to claim 11.

## Revendications

1. Procédé de détection de l'état de charge d'une pompe d'un appareil électroménager transportant un fluide, entraînée par un moteur électrique, dans lequel la pompe est entraînée par un moteur électrique à trois conducteurs, triphasé, couplé en étoile, à excitation permanente et conçu sous forme d'un moteur synchrone en utilisant une régulation vectorielle, dans lequel au moins un état de charge de la pompe est déterminé à partir d'une composante de courant iq de la régulation vectorielle formant un couple de rotation, au moyen d'un circuit de détection,
**caractérisé en ce que** le courant ia ou ib est mesuré uniquement dans deux des trois conducteurs, dans lequel un cas de charge de la pompe, un cas de marche à vide de la pompe, un débit de fluide bloqué à travers la pompe et/ou une quantité pompée du fluide est/sont déterminés en tant qu'état(s) de charge et dans lequel la quantité de fluide pompée est déterminée à partir de l'intégrale temporelle de la différence entre la grandeur de la composante de courant iq dans le cas de charge et la grandeur de la composante de courant iq dans le cas de marche à vide.

2. Procédé selon la revendication 1, **caractérisé en ce que** l'état de charge est déterminé à partir de l'évolution de la composante de courant iq.

3. Procédé selon l'une des revendications précédentes, **caractérisé en ce que** le cas de charge de la pompe est détecté à partir d'un courant minimal et d'un courant maximal consécutifs dans l'évolution de la composante de courant iq.

4. Procédé selon l'une des revendications précédentes, **caractérisé en ce que** le cas de marche à vide de la pompe est détecté à partir d'une variation de courant négative de la composante de courant iq dont la valeur devient inférieure à une valeur prédéterminée V' produite après le cas de charge.

5. Procédé selon l'une des revendications précédentes, **caractérisé en ce que** la quantité pompée de fluide est déterminée à partir de l'intégrale temporelle de la composante de courant iq.

6. Procédé selon l'une des revendications précédentes, **caractérisé en ce que**, dans un cas de charge, et dans un cas de marche à vide non détecté, le débit de fluide bloqué à travers la pompe est détecté à partir de la mesure de la durée du fonctionnement de la pompe et d'une diminution de la composante de courant iq en dessous d'une valeur minimale prédéterminée.

7. Procédé selon l'une des revendications précédentes, **caractérisé en ce qu'**une composante de courant iq filtrée par un filtre passe-bas est utilisée en tant que composante de courant iq.

8. Procédé selon l'une des revendications précédentes, **caractérisé en ce que** la pompe est une pompe de lave-vaisselle ou une pompe de machine à laver.

9. Procédé selon l'une des revendications précédentes, **caractérisé en ce que** la pompe est une pompe de liquide de lavage, notamment d'un lave-vaisselle ou d'une machine à laver.

10. Procédé selon l'une des revendications précédentes, **caractérisé en ce que** le fluide pompé est un liquide, notamment de l'eau ou du liquide de lavage.

11. Dispositif de détection de l'état de charge d'une pompe d'un appareil électroménager entraînée par un moteur électrique et transportant un fluide, destiné à exécuter le procédé selon l'une ou plusieurs des revendications précédentes.

12. Appareil électroménager, notamment lave-vaisselle ou machine à laver, comprenant un dispositif selon la revendication 11.
